# EUROPÄISCHE PATENTANMELDUNG

(11) **EP 3 009 748 A2**
(43) Veröffentlichungstag der Anmeldung: **20.04.2016**
(21) Anmeldenummer: 15002656.5
(22) Anmeldetag: 11.09.2015
(51) Int. Cl.: F24C 15/32, A21B 1/24

(54) **BACKOFEN MIT RÜCKWÄRTIGE KAMMER ZUM HEISSLUFTUMLAUF**

(71) Anmelder: V-Zug AG, 6301 Zug (CH)
(72) Erfinder: Tomljenovic, Tomislav, 6345 Neuheim (CH); Arnold, Pascal, 6300 Zug (CH); Frey, Ulrich, 8912 Obfelden (CH); Poiré, Stéphane, 6003 Luzern (CH)
(74) Vertreter: Sutter, Kurt

(57) **Zusammenfassung**

Der Backofen besitzt einen Garraum (2), in dessen Decke eine erste Heizung (4) angeordnet ist. Hinter der Rückwand (6) des Garraums (2) befindet sich eine Kammer (7), in welcher ein Querstromlüfter (10) untergebracht ist. Der Querstromlüfter (10) saugt Luft über mindestens eine Eintrittsöffnung (8) am oberen Ende der Rückwand (6) an und entlässt sie sodann durch mindestens eine Austrittsöffnung (9) am unteren Ende der Rückwand wieder in den Garraum (2). Im Betrieb wird die erste Heizung (4) zusammen mit dem Lüfter (10) eingeschaltet, sodass sich die Luft an der ersten Heizung (4) erhitzt, bevor sie durch die Kammer (7) gefördert wird. Somit wird also die Oberhitze oder der Grill des Backofens im Umluftbetrieb zum Erwärmen der Luft verwendet. Eine separate Heizung in der Kammer (7) erübrigt sich, und es kann in einfacher Weise eine grosse Heizleistung erzielt werden.

## Beschreibung

### Gebiet der Erfindung

Die Erfindung betrifft einen Backofen mit einem Garraum, einer an der Decke im Garraum angeordneten Heizung, einer Kammer an der Rückseite des Garraums sowie einem Lüfter in der Kammer. Die Erfindung betrifft weiter ein Verfahren zum Betrieb dieses Backofens.

### Hintergrund

Bei Heissluftbacköfen ist in der Regel an der Rückseite des Garraums eine Kammer angeordnet, in welcher sich ein Lüfter und eine Heizung befinden. Die Luft wird vom Lüfter durch Lufteintrittsöffnungen in die Kammer gesogen, durch die Heizung geführt und durch Luftaustrittsöffnungen wieder zurück in den Garraum geblasen. Zusätzlich zur Heizung in der Kammer besitzen derartige Geräte oftmals separate Heizungen an der Ober- und Unterseite des Garraums.

In EP 2610557 ist ein Gerät beschrieben, bei, welchem die Luft aus dem Garraum durch einen Kanal unterhalb des Garraums angesogen und dort mit der Unterhitze des Geräts erhitzt wird. Sodann läuft die Luft über einen Querstromlüfter in die Kammer an der Rückseite des Garraums und gelangt über Austrittsöffnungen zurück in den Garraum.

### Darstellung der Erfindung

Aufgabe der vorliegenden Erfindung ist es, einen Backofen und ein Betriebsverfahren der eingangs genannten Art bereitzustellen, welche eine aus konstruktiver Sicht einfache Lösung mit guter Heizleistung erlauben.

Diese Aufgabe wird vom Backofen gemäss Anspruch 1 gelöst. Demgemäss besitzt das Gerät:
- Einen Garraum: Dieser dient in an sich bekannter Weise der Aufnahme von Gargut.
- Eine an der Decke angeordnete erste Heizung: Diese kann beispielsweise auch als "Oberhitze" oder "Grillheizung" des Geräts dienen. Sie ist im Garraum angeordnet.
- Eine Kammer an der Rückwand des Garraums: Diese Kammer besitzt mindestens eine Lufteintrittsöffnung sowie mindestens eine Luftaustrittsöffnung, über welche sie mit dem Garraum verbunden ist. Unter der "Rückwand" des Garraums ist dabei diejenige vertikale Wand des Garraums zu verstehen, welche der Türe des Garraums gegenüber liegt. Die Kammer ist vorzugsweise vollständig hinter dem Garraum angeordnet, sie kann sich aber auch über den Rand der Rückwand etwas gegen vorne erstrecken, z.B. im Deckenbereich.
- Einen in der Kammer angeordneten Lüfter: Der Lüfter ist so ausgestaltet, dass er Luft aus dem Garraum durch die Lufteintrittsöffnung(en) in die Kammer und durch die Luftaustrittsöffnung(en) Luft aus der Kammer in den Garraum fördern kann.

Anspruchsgemäss sind die Lufteintrittsöffnung(en) entlang des oberen Randbereichs der Rückwand angeordnet. Unter der Anordnung in einem "oberen Randbereich" der Kammer ist dabei insbesondere zu verstehen, dass die Lufteintrittsöffnung(en) in einem Bereich der Rückwand angeordnet sind, der eine maximale Ausdehnung von der Decke des Garraums hat, welche höchstens 25%, insbesondere höchstens 15%, der Höhe des Garraums entspricht. Die Lufteintrittsöffnungen sind also in den "obersten 25%" bzw. in den "obersten 15%" der Rückwand angeordnet.

Die Luftaustrittsöffnung(en) sind tiefer als die Lufteintrittsöffnung(en) angeordnet, d.h. sie befinden sich unterhalb der Lufteintrittsöffnung(en).

Wenn nun der Lüfter in Betrieb ist, wird die Luft aus dem Garraum im Bereich der Decke angesogen, so dass sie über die Heizung an der Decke streicht. Sodann wird die erwärmte Luft weiter unten wieder in den Garraum zurückgeführt. Damit wird es möglich, die Heizung an der Decke zu verwenden, um die Luft im Umluftbetrieb (d.h. bei eingeschaltetem Lüfter) zu erhitzen. Eine separate Heizung in der Kammer wird damit optional. Da die erste Heizung an der Decke sehr gross sein kann, wird es möglich, eine grosse Heizleistung zu erreichen, ohne dass lokal sehr hohe Temperaturen erforderlich sind.

Zudem ist bei dieser Ausgestaltung der Weg der Luft zwischen der ersten Heizung und dem Wiedereintritt in den Garraum verhältnismässig lang, so dass die Temperaturverteilung der in den Garraum zurückströmenden Luft relativ homogen ist.

Wenn die Luft im Garraum geheizt werden soll, kann die erste Heizung an der Decke des Garraums eingeschaltet werden. Mit dem Lüfter wird sodann die Luft durch die erste Heizung und die Lufteintrittsöffnung(en) in die Kammer eingesogen und danach durch die Luftaustrittsöffnung(en) aus der Kammer zurück in den Garraum gefördert.

Insbesondere wird in der Kammer nicht zwingend eine Heizung benötigt, was den Aufbau des Geräts weiter vereinfacht.

Um einen breiten Ansaugbereich mit gleichmässiger Druckverteilung zu begünstigen, ist der Lüfter vorzugsweise als Querstromlüfter ausgestaltet, dessen Drehachse parallel zur Decke des Garraums verläuft. Vorzugsweise befindet sich der Querstromlüfter am oberen Ende der Kammer.

Ein weiterer Vorteil dieser Ausführung liegt darin, dass unabhängig von der Höhe des Garraums, für verschiedene Gerätetypen der gleiche Querstromlüfter eingesetzt werden kann.

Ebenfalls um einen breiten Ansaugbereich zu begünstigen, erstrecken sich die Lufteintrittsöffnung(en) über mindestens 60%, insbesondere über mindestens 80%, der Breite des Garraums. Wenn mehrere Lufteintrittsöffnungen vorgesehen sind, ist dies so zu verstehen, dass der Abstand der äusseren Ränder der seitlich äussersten Lufteintrittsöffnungen mindestens 60%, insbesondere mindestens 80% der Breite des Garraums beträgt - in diesem Falle sind die Lufteintrittsöffnungen mit Vorteil einigermassen gleichmässig verteilt, indem deren horizontale Abstände jeweils nicht mehr als 20% der Breite des Garraums betragen.

Auch die Luftaustrittsöffnung(en) erstrecken sich vorzugsweise im gleichen Sinne über mindestens 60%, insbesondere über mindestens 80%, der Breite des Garraums.

Mit Vorteil sind die Austrittsöffnung(en) in einem Bereich der Rückwand angeordnet, der eine maximale Ausdehnung vom Boden des Garraums von höchstens 60% der Höhe des Garraums besitzt. Mit anderen Worten befinden sich die Austrittsöffnung(en) also in den untersten 60% der Rückwand. Damit wird die Luftverteilung im Garraum verbessert. In einer besonders vorteilhaften Ausführung beträgt maximale Ausdehnung des besagten Bereichs vom Boden des Garraums höchstens 25% der Höhe des Garraums, d.h. die Austrittsöffnungen liegen in den untersten 25% der Rückwand. Dadurch wird, wie weiter unten genauer beschrieben, die Luftverteilung insbesondere dann verbessert, wenn sich ein oder mehrere Gargutbehältnisse im Garraum befinden, z.B. Kuchenbleche.

Weiter kann der Garraum in an sich bekannter Weise mindestens erste und zweite Aufnahmeorgane zur Aufnahme von Gargutbehältern (z.B. Backblechen) aufweisen, z.B. in der Form von Rillen oder Führungen an den Seitenwänden des Garraums. Dabei ist das erste Aufnahmeorgan höher als das zweite Aufnahmeorgan angeordnet.

Zudem sind in diesem Fall mit Vorteil erste und zweite Anschläge vorgesehen, welche die maximale Einschubposition der Gargutbehälter in das erste bzw. das zweite Aufnahmeorgan definieren, d.h. der erste Anschlag ist dem ersten Aufnahmeorgan zugeordnet, und der zweite Anschlag ist dem zweiten Aufnahmeorgan zugeordnet. Die Anschläge können z.B. durch geeignete Vorsprünge an den Führungsrillen, aber beispielsweise auch durch die Rückwand des Garraums gebildet werden.

Dabei besitzt der zweite Anschlag einen grösseren Abstand von der Rückwand als der erste Anschlag, vorteilhaft einen um mindestens 3 cm grösseren Abstand. Mit anderen Worten kann also der Gargutbehälter in der oberen Position tiefer in den Garraum geschoben werden als in der unteren Position. Dadurch kann, wie weiter unten genauer beschrieben, ein mäandrierender Luftstrom im Garraum erzeugt werden, der die Wärme gut verteilt.

Mit Vorteil besitzen die Austrittsöffnung(en) Luftführungsmittel, welche derart ausgerichtet sind, dass die Luft schräg nach oben in den Garraum einströmt. Darunter ist insbesondere zu verstehen, dass bei jeder Austrittsöffnung die über den Volumenstrom der Luft gemittelte Eintrittsrichtung der Luft in den Garraum um einen Winkel α > 0, insbesondere α > 10°, von der Horizontalen nach oben abweicht. Dadurch wird erreicht, dass das Gargut kaum von oben, sondern primär von unten mit heisser Luft angeblasen wird, wodurch die Gefahr lokaler Bräunungen oder gar Schwärzungen des Garguts reduziert wird.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Schnitt durch einen Backofen und
Fig. 2 eine Ansicht des Backofens nach Fig. 1 von vorne mit geöffneter Türe.

### Wege zur Ausführung der Erfindung

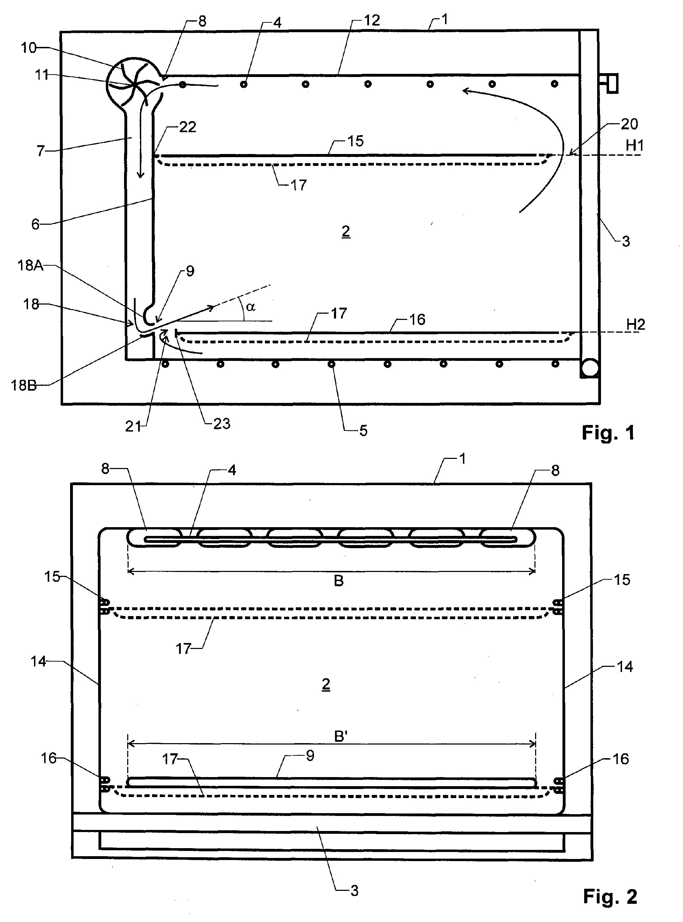

In Fig. 1 und 2 ist ein Backofen mit einem Gehäuse 1 und einem Garraum 2 dargestellt. Nach vorne kann der Garraum von einer Türe 3 geschlossen werden, welche beispielsweise in an sich bekannter Weise um eine Schwenkachse in ihrem unteren Randbereich schwenkbar ist und so geöffnet werden kann.

In der dargestellten Ausführung besitzt das Gerät zwei Heizungen. Eine erste Heizung 4 ist innerhalb des Garraums 2 an dessen Decke angeordnet. Hier handelt es sich um eine Oberhitze oder eine Grillheizung, wie sie an sich bekannt ist. Eine zweite Heizung 5 ist am Boden des Garraums 2 angeordnet, vorzugsweise ausserhalb des Garraums und im thermischen Kontakt mit dem Boden. Sie dient als Unterhitze.

Hinter der der Türe 3 gegenüber liegenden Rückwand 6 des Garraums 2 befindet sich eine Kammer 7.

Am oberen Ende der Kammer 7 sind in der dargestellten Ausführung mehrere Lufteintrittsöffnungen 8 vorgesehen, während weiter unten eine oder mehrere Luftaustrittsöffnungen 9 angeordnet sind. In der Kammer 7 ist weiter ein Querstromlüfter 10 untergebracht. Dieser befindet sich mit Vorteil unmittelbar hinter den Lufteintrittsöffnungen 8 am oberen Ende der Kammer 7. Er kann um eine horizontale Drehachse 11 rotiert werden, welche parallel zur Decke 12 des Garraums 2 verläuft, und fördert im Betrieb Luft aus dem Garraum 2 durch die Lufteintrittsöffnungen 8 und die Kammer 7 gegen unten zur Luftaustrittsöffnung 9 und von dort in den Garraum 2 zurück. Bevor die Luft durch die Lufteintrittsöffnungen in die Kammer 7 gelangt, strömt sie im Garraum 2 über die Heizung 4 an der Decke 12.

Wie insbesondere aus Fig. 2 ersichtlich, erstrecken sich die Lufteintrittsöffnungen 8 über eine Breite B der Rückwand 6, welche mindestens 60%, insbesondere mindestens 80% der Breite des Garraums 2 beträgt. Auch die Luftaustrittsöffnung 9 erstreckt sich über eine Breite B', welche mindestens 60%, insbesondere mindestens 80% der Breite des Garraums 2 beträgt. Dadurch kann erreicht werden, dass im Garraum 2 eine sehr homogene Luftdurchmischung stattfindet.

An den seitlichen Wänden 14 des Garraums 2 sind Aufnahmeorgane 15, 16 angeordnet, welche Gargutbehälter (gestrichelt angedeutet und mit Bezugsziffern 17 bezeichnet) aufnehmen können. Die Aufnahmeorgane 15, 16 können beispielsweise von Stegen oder Rillen gebildet werden, welche an den Seitenwänden 15 des Garraums 2 angeordnet sind.

In der Ausführung nach Fig. 1 und 2 sind ein erstes, oberes Aufnahmeorgan 15 sowie ein zweites, unteres Aufnahmeorgan 16 vorgesehen, sodass ein Gargutbehälter 17 in einer oberen und ein anderer in einer unteren Position im Garraum 2 angeordnet werden können. Natürlich können auch noch mehr Aufnahmeorgane vorgesehen sein, sodass Gargutbehälter in weiteren Positionen in den Garraum 2 eingebracht werden können.

Die Höhe H1, auf welcher das erste Aufnahmeorgan 15 den Gargutbehälter 17, insbesondere ein Backblech, aufnimmt, liegt mit Vorteil oberhalb der Luftaustrittsöffnung(en) 9, sodass die durch die Luftaustrittsöffnungen 9 in den Garraum 2 eintretende Luft unterhalb des oberen Gargutbehälters eintritt. Mit Vorteil beträgt der Abstand der Höhe H1 vom Boden des Garraums mindestens 40 % der Höhe des Garraums.

Die Höhe H2, auf welcher das zweite Aufnahmeorgan 16 den Gargutbehälter, insbesondere in Form eines Backblechs, aufnimmt, liegt mit Vorteil unterhalb der Luftaustrittsöffnungen 9, so dass die aus diesen Öffnungen austretende Luft nicht unter den im zweiten Aufnahmeorgan gehaltenen Gargutbehälter geblasen wird. Weiter beträgt der Abstand der Höhe H2 vom Boden des Garraums mit Vorteil höchstens 25% der Höhe des Garraums, so dass der untere Gargutbehälter auch dann noch gut einsehbar ist, wenn sich zusätzlich ein oberer Gargutbehälter im Garraum befindet.

Wie aus Fig. 1 ersichtlich, sind im Bereich der Austrittsöffnungen 9 Luftführungsmittel 18 angeordnet, beispielsweise in Form einer in die Kammer 7 eintretenden Ausbuchtung 18A oberhalb der Austrittsöffnungen 9 und/oder in Form eines Luftleitblechs 18B in der Kammer 7 unterhalb der Austrittsöffnungen 9.

Die Luftführungsmittel 18 sind so ausgestaltet, dass die Luft schräg nach oben in den Garraum 2 einströmt. Wie bereits erwähnt, ist dies insbesondere so zu verstehen, dass bei jeder Austrittsöffnung 9 die über den Volumenstrom der Luft gemittelte Eintrittsrichtung der Luft in den Garraum 2 um einen Winkel α > 0, insbesondere α > 10°, von der Horizontalen nach oben abweicht. Dieser Winkel ist in Fig. 1 eingezeichnet.

Im Betrieb kann nun der Querstromlüfter 10 zusammen mit der oberen Heizung 4 eingeschaltet werden. Dadurch wird die vom Querstromlüfter 10 angesaugte Luft an der Heizung 4 erwärmt, bevor sie in die Kammer 7 eintritt. Vom Querstromlüfter 10 wird sie sodann nach unten durch die Kammer 7 bis zur Austrittsöffnung 9 gefördert, von wo sie wieder in den Garraum 2 zurück gelangt. Dadurch entsteht der Fig. 1 mit Pfeilen eingezeichneten Luftstrom.

Wie aus Fig. 1 ersichtlich, wird der obere Gargutbehälter 17 vorzugsweise weiter in den Garraum 2 hineingeschoben als der untere. Dadurch entsteht an der Vorderseite des Gargutbehälters (das heisst zwischen dem Gargutbehälter und der Türe 3) ein Abstand 20, durch welchen die Luft vom Mittelbereich des Garraums nach oben fliessen kann. Andererseits entsteht hinter dem unteren Gargutbehälter und der Rückwand 6 im Bereich der Luftaustrittsöffnung 9 ein Abstand 21, durch welchen Luft von unterhalb des unteren Gargütbehälters durch Luftstrom aus der Austrittsöffnung 9 mitgerissen und in den mittleren Bereich des Garraums 2 gezogen wird. Auf diese Weise wird ein mäanderförmiger Luftstrom erzeugt, der eine gute Luftdurchmischung im ganzen Garraum gewährleistet, selbst wenn zwei Gargutbehälter im Garraum 2 angeordnet werden.

Um für den Benutzer die korrekte Beladung des Garraums 2 zu vereinfachen, sind Anschläge 22 und 23 vorgesehen. Ein erster Anschlag 22 ist dem oberen Aufnahmeorgan 15 zugeordnet und definiert die maximale Einschubposition des Gargutbehälters 17 im oberen Aufnahmeorgan 15. In der Ausführung nach Fig. 1 wird der erste Anschlag 22 beispielsweise durch die Rückwand 6 des Garraums 2 gebildet, sodass der Gargutbehälter bis ganz nach hinten in den Garraum 2 eingeschoben werden kann.

Ein zweiter Anschlag 23 wird durch zwei Stopporgane, beispielsweise an den Seitenwänden 14 des Garraums 2, gebildet. Die Stopporgane sind so weit von der Rückwand 6 entfernt, dass der erwähnte Abstand 21 sichergestellt wird.

Die Abstände 20 und 21 betragen vorzugsweise mindestens 3 cm. Entsprechend ist der Abstand des zweiten Anschlags 23 von der Rückwand 6 mit Vorteil um mindestens 3 cm grösser als jener des ersten Anschlags 22.

Das Luftvolumen, welches vom Querstromlüfter 10 gefördert wird, kann wesentlich grösser sein als bei konventionellen Umluftbacköfen, da die Heizung 4 eine grosse Austauschfläche mit der Luft bildet. Vorzugsweise beträgt der Volumenstrom der Luft, welcher vom Querstromlüfter 10 gefördert wird, mindestens 80 m³/h.

Zum Heizen der Luft können gleichzeitig die erste Heizung 4 sowie die zweite Heizung 5 zusammen mit dem Querstromlüfter 10 betrieben werden. Beispielsweise werden die erste Heizung mit einer Gesamtleistung von 2000 W und die zweite Leistung mit einer Gesamtleistung von 800 W betrieben.

Zu beachten ist, dass die oben beschriebene Ausführung nur eine der Möglichkeiten zur Realisierung der Erfindung ist.

So kann die erste Heizung 4 beispielsweise auch von der Grillheizung des Backofens gebildet werden, welche zusätzlich zu einer normalen Oberhitze an der Decke des Garraums 2 angeordnet ist.

Weiter braucht die Austrittsöffnung 9 nicht als eine einzige Öffnung ausgestaltet zu sein, sondern es können mehrere separate Öffnungen vorgesehen werden, die z.B. in einer horizontalen Reihe an der Rückwand 16 angeordnet sind.

Andererseits kann die Eintrittsöffnung 8 als eine zusammenhängende Eintrittsöffnung realisiert sein.

Vorteilhaft sind alle Lufteintrittsöffnungen 8 in den obersten 25%, insbesondere in den obersten 15% der Rückwand angeordnet, und/oder es sind alle Luftaustrittsöffnungen in den untersten 60%, insbesondere in den untersten 25% der Rückwand angeordnet.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Backofen mit
einem Garraum (2)
einer an der Decke im Garraum (2) angeordneten ersten Heizung (4),
einer Kammer (7) an einer Rückwand (6) des Garraums (2) mit mindestens einer Lufteintrittsöffnung (8) und mindestens einer Luftaustrittsöffnung (9) zum Garraum (2) und
einem in der Kammer (7) angeordneten Lüfter (10), um Luft aus dem Garraum (2) durch die Lufteintrittsöffnung (8) in die Kammer (7) und durch die Luftaustrittsöffnung (9) aus der Kammer (7) in den Garraum (2) zu fördern,
**dadurch gekennzeichnet, dass** die Lufteintrittsöffnung(en) (8) entlang eines oberen Randbereichs der Rückwand (6) angeordnet sind und die Luftaustrittsöffnung(en) (9) tiefer als die Lufteintrittsöffnungen (8) angeordnet sind, derart, dass mit dem Lüfter (10) die Luft aus dem Garraum (2) über die erste Heizung (4) in die Kammer (7) und sodann weiter unten über die Luftaustrittsöffnungen (9) wieder in den Garraum förderbar ist.

2. Backofen nach einem der vorangehenden Ansprüche, wobei in der Kammer (7) keine Heizung angeordnet ist.

3. Backofen nach einem der vorangehenden Ansprüche, wobei der Lüfter (10) ein Querstromlüfter ist, dessen Drehachse sich parallel zur Decke des Garraums (2) erstreckt.

4. Backofen nach einem der vorangehenden Ansprüche, wobei sich die Lufteintrittsöffnung(en) (8) und/oder die Luftaustrittsöffnung(en) (9) über mindestens 60%, insbesondere über mindestens 80% der Breite des Garraums (2) erstrecken.

5. Backofen nach einem der vorangehenden Ansprüche, wobei die Luftaustrittsöffnung(en) (9) in einem Bereich der Rückwand (6) angeordnet sind, der eine maximale Ausdehnung vom Boden des Garraums (2) von höchstens 60% der Höhe des Garraums (2) besitzt.

6. Backofen nach einem der vorangehenden Ansprüche, wobei die Luftaustrittsöffnung(en) (9) in einem Bereich der Rückwand (6) angeordnet sind, der eine maximale Ausdehnung vom Boden des Garraums (2) von höchstens 25% der Höhe des Garraums (2) besitzt.

7. Backofen nach einem der vorangehenden Ansprüche, wobei der Garraum (2) mindestens erste und zweite Aufnahmeorgane (15, 16) zur Aufnahme von Gargutbehältern aufweist, wobei das erste Aufnahmeorgan (15) höher als das zweite Aufnahmeorgan (16) angeordnet ist.

8. Backofen nach Anspruch 7, wobei weiter erste und zweite Anschläge (22, 23) vorgesehen sind, welche eine maximale Einschubposition der Gargutbehälter in das erste bzw. das zweite Aufnahmeorgan (15, 16) definieren, wobei der zweite Anschlag (23) einen grösseren Abstand von der Rückwand (6) aufweist als der erste Anschlag (22), insbesondere einen um mindestens 3 cm grösseren Abstand.

9. Backofen nach einem der Ansprüche 7 oder 8, wobei das erste Aufnahmeorgan (15) zur Aufnahme eines Gargutbehälters auf einer Höhe H1 ausgestaltet ist, welche über den Luftaustrittsöffnung(en) (9) liegt, und insbesondere wobei ein Abstand der Höhe H1 von einem Boden des Garraums (2) mindestens 40% der Höhe des Garraums (2) beträgt.

10. Backofen nach einem der Ansprüche 7 bis 9, wobei das zweite Aufnahmeorgan (16) zur Aufnahme eines Gargutbehälters auf einer Höhe H2 ausgestaltet ist, welche unterhalb der Luftaustrittsöffnung(en) (9) liegt und/oder wobei ein Abstand der Höhe H2 von einem Boden des Garraums (2) höchstens 25% der Höhe des Garraums (2) beträgt.

11. Backofen nach einem der vorangehenden Ansprüche, wobei die Luftaustrittsöffnung(en) (9) Luftführungsmittel (18) aufweisen, welche derart ausgerichtet sind, dass die Luft aus den Luftaustrittsöffnung(en) (9) schräg nach oben in den Garraum (2) einströmt.

12. Verfahren zum Betrieb eines Backofens nach einem der vorangehenden Ansprüche, wobei zum Heizen der Luft die erste Heizung (4) an der Decke des Garraums (2) eingeschaltet wird und mit dem Lüfter (10) die Luft durch die erste Heizung (4) und die Lufteintrittsöffnung(en) (8) in die Kammer (7) eingesogen und sodann durch die Luftaustrittsöffnung(en) (9) aus der Kammer (7) zurück in den Garraum (2) gefördert wird.

13. Verfahren nach Anspruch 9, wobei mit dem Lüfter (10) die Luft mit einem Volumenstrom von mindestens 80 m³/h gefördert wird.

14. Verfahren nach einem der Ansprüche 12 oder 13, wobei der Backofen eine zweite Heizung (5) am Boden des Garraums (2) aufweist, und wobei zum Heizen der Luft sowohl die erste Heizung (4) als auch die zweite Heizung (5) zusammen mit dem Lüfter (10) betrieben werden.
